(19) **Europäisches Patentamt / European Patent Office / Office européen des brevets**

(11) **EP 1 358 722 B1**

(12) **EUROPEAN PATENT SPECIFICATION**

(45) Date of publication and mention
of the grant of the patent:
**13.08.2008 Bulletin 2008/33**

(21) Application number: **02737623.5**

(22) Date of filing: **04.01.2002**

(51) Int Cl.:
*H04B 7/04* (2006.01)     *H04B 7/06* (2006.01)

(86) International application number:
**PCT/IB2002/000029**

(87) International publication number:
**WO 2002/061969 (08.08.2002 Gazette 2002/32)**

(54) **RADIO COMMUNICATION SYSTEM**

FUNKKOMMUNIKATIONSSYSTEM

SYSTEME DE RADIOCOMMUNICATION

(84) Designated Contracting States:
**AT BE CH CY DE DK ES FI FR GB GR IE IT LI LU MC NL PT SE TR**

(30) Priority: **30.01.2001 GB 0102316**

(43) Date of publication of application:
**05.11.2003 Bulletin 2003/45**

(73) Proprietor: **Koninklijke Philips Electronics N.V.**
**5621 BA Eindhoven (NL)**

(72) Inventor: **KHATRI, Bhavin**
**NL-5656 AA Eindhoven (NL)**

(74) Representative: **Damen, Daniel Martijn et al**
**Philips**
**Intellectual Property & Standards**
**P.O. Box 220**
**5600 AE Eindhoven (NL)**

(56) References cited:
**WO-A-01/56192**     **WO-A-98/36596**
**WO-A-98/42150**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a radio communication system having a communication channel comprising a plurality of paths between first and second terminals, each comprising a plurality of antennas. The present invention also relates to a terminal for use in such a system and to a method of operating such a system.

Background Art

In a radio communication system, radio signals typically travel from a transmitter to a receiver via a plurality of paths, each involving reflections from one or more scatterers. Received signals from the paths may interfere constructively or destructively at the receiver (resulting in position-dependent fading). Further, differing lengths of the paths, and hence the time taken for a signal to travel from the transmitter to the receiver, may cause inter-symbol interference.

It is well known that the above problems caused by multipath propagation can be mitigated by the use of multiple antennas at the receiver (receive diversity), which enables some or all of the multiple paths to be resolved. For effective diversity it is necessary that signals received by individual antennas have a low cross-correlation. Typically this is ensured by separating the antennas by a substantial fraction of a wavelength, although closely-spaced antennas may also be employed by using techniques disclosed in WO-A-0171843.

By ensuring use of substantially uncorrelated signals, the probability that destructive interference will occur at more than one of the antennas at any given time is minimised.

Similar improvements may also be achieved by the use of multiple antennas at the transmitter (transmit diversity). Diversity techniques may be generalised to the use of multiple antennas at both transmitter and receiver, known as a Multi-Input Multi-Output (MIMO) system, which can further increase system gain over a one-sided diversity arrangement. As a further development, the presence of multiple antennas enables spatial multiplexing, whereby a data stream for transmission is split into a plurality of sub-streams, each of which is sent via many different paths. One example of such a system is described in United States patent 6,067,290, another example, known as the BLAST system, is described in the paper "V-BLAST: an architecture for realising very high data rates over the rich-scattering wireless channel" by P W Wolniansky et al in the published papers of the 1998 URSI International Symposium on Signals, Systems and Electronics, Pisa, Italy, 29 September to 2 October 1998.

Typically in a MIMO system the original data stream is split into $J$ sub-streams, each of which is transmitted by a different antenna of an array having $n_T = J$ elements. A similar array having $n_R \geq J$ elements is used to receive signals, each antenna of the array receiving a different superposition of the $J$ sub-streams. Using these differences, together with knowledge of the channel transfer matrix **H**, the sub-streams can be separated and recombined to yield the original data stream. In a variation of such a system, disclosed in published European Patent Application EP-A2-0,905,920, the sub-streams are transformed before transmission such that, after propagation through the channel, another transformation recovers the original sub-streams. However, such a system requires knowledge of the transfer matrix **H** at both transmitter and receiver, since the transformations applied are based on a singular value decomposition of that matrix.

The performance gains which may be achieved from a MIMO system may be used to increase the total data rate at a given error rate, or to reduce the error rate for a given data rate, or some combination of the two. A MIMO system can also be controlled to reduce the total transmitted energy or power for a given data rate and error rate.

In theory, the capacity of the communications channel increases linearly with the smaller of the number of antennas on the transmitter or the receiver. However, simulation results in the paper "Channel Capacity Evaluation of Multi-Element Antenna Systems using a Spatial Channel Model" by A G Burr in the published papers of the ESA Millennium Conference on Antennas and Propagation, Davos, Switzerland, 9-14 April 2000 show that, in practice, the capacity of the communications channel is limited by the number of scatterers placed in the environment.

A more useful way to view a MIMO system is that the capacity of the channel is limited by the number of statistically independent paths between the transmitter and receiver, caused by scatterers in the environment. Therefore, there is no advantage in the antenna arrays at the transmitter or receiver having more elements than the number of independent paths caused by their particular location in a given environment. Presently-proposed MIMO systems employ a fixed number of antennas at the transmitter and receiver and thus a fixed number of sub-streams, which becomes inefficient if the number of independent paths is less than the number of sub-streams. In addition, as discussed above, known MIMO systems rely on placing the antennas sufficiently far apart to achieve substantially uncorrelated signals.

WO 98/36596 describes a method of directional radio communication. A station receives a signal from another station from a plurality of different directions. The station determines a principle beam direction. The station subsequently transmits a signal to the other station in the principle beam direction and at least one auxiliary beam direction, which is adjacent to the principle beam direction. Accordingly, there is a higher probability that the other station will receive this signal.

WO 98/42150 describes a method of communicating between a base station and a plurality of users. The method involves using a same downlink antenna pattern for transmission to the plurality of users. The downlink antenna pattern is adjusted to improve a performance measure of the system, such as bit error rate, received signal strength, or co-channel interference.

WO 01/56192 is a patent application that was published on 02.08.2001. This publication date is after the effective filing date of the present application, which is 30.01.2001. However, the effective filing date of WO 01/56192, which appears to be 28.01.2000, is prior to the effective filing date of the present application. WO 01/56192 describes a method of implementing diversity in transmission. A transmitter forms orthogonal antenna beams, which are adjacent to each other. The antenna beams are directed with respect to an estimated arrival of direction of a received signal so that the estimated direction of arrival falls between antenna amplification maximums of the antenna beams.

Disclosure of Invention

An object of the present invention is to provide a MIMO system having improved efficiency and flexibility.

According to a first aspect of the present invention there is provided a terminal as claimed in claim 1. According to further aspects of the invention there are provided a radio communication system as claimed in claim 8, and a method of operating a radio communication system as claimed in claim 9.

The present invention improves flexibility by allowing a varying number of transmitted sub-streams, and improves efficiency and throughput by taking account of the angular distribution of multipath signals, without requiring any increase in total transmitted power compared to a conventional system in which terminals each have a single antenna.

The directions of arrival of signals may be determined by measuring an angular power spectrum and determining the directions from which the strongest signals arrive. For transmission, each sub-stream may be transmitted with the same power and bitrate, or the individual powers and/or bitrates of the sub-streams could be varied depending on some quality parameter such as signal to noise ratio. This could result in further improvements to system capacity for a given total radiated power from a terminal. There is no need for the number of directions from which signals are received to be the same as the number of directions in which signals are transmitted.

The plurality of antennas at each terminal may be of any suitable type, with directional or omnidirectional radiation patterns depending on the application. There is no need for all the antennas on a terminal to be of the same type or to have the same radiation pattern, nor is there any need for the terminals to have the same number of antennas.

The present invention is based upon the recognition, that by determining directions from which the strongest signals are received from a particular terminal and by transmitting signals to that terminal in these directions increased spectral efficiency is achieved since less power is wasted in transmission.

Brief Description of Drawings

Embodiments of the present invention will now be described, by way of example, with reference to the accompanying drawings, wherein:

Figure 1 is a block schematic diagram of a known MIMO radio system;
Figure 2 is a flow chart illustrating the operation of a transceiver made in accordance with the present invention;
Figure 3 is a block schematic diagram of a transmitter;
Figure 4 is a diagram illustrating the operation of a weighting matrix;
Figure 5 is a diagram illustrating the generation of a plane wave from an antenna array; and
Figure 6 is a block schematic diagram of a receiver.

In the drawings the same reference numerals have been used to indicate corresponding features.

Modes for Carrying Out the Invention

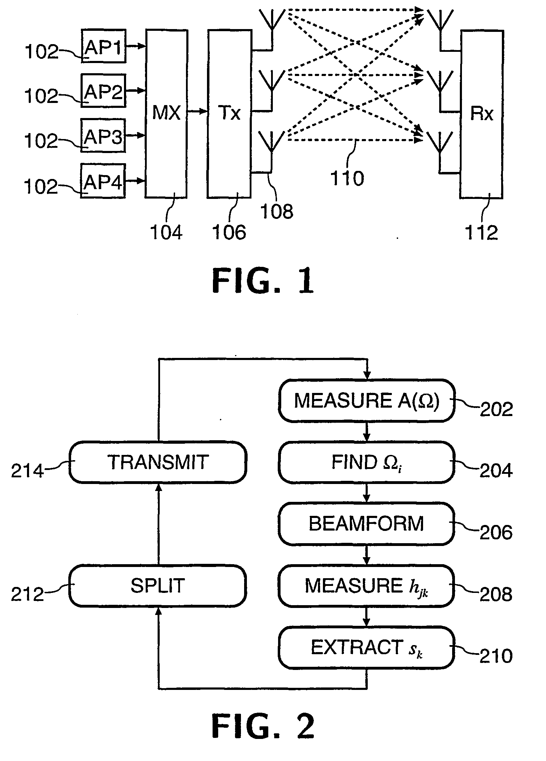

Figure 1 illustrates a known MIMO radio system. A plurality of applications 102 (AP1 to AP4) generate data streams for transmission. An application 102 could also generate a plurality of data streams. The data streams are combined by a multiplexer (MX) 104 into a single data stream, which is supplied to a transmitter (Tx) 106. The transmitter 106 separates the data stream into sub-streams and maps each sub-stream to one or more of a plurality of transmit antennas 108.

Suitable coding, typically including Forward Error Correction (FEC), may be applied by the transmitter 106 before multiplexing. This is known as vertical coding, and has the advantage that coding is applied across all sub-streams. However, problems may arise in extracting the sub-streams since joint decoding is needed and it is difficult to extract each sub-stream individually. As an alternative each sub-stream may be coded separately, a technique known as horizontal coding which may simplify receiver operation. These techniques are discussed for example in the paper "Effects of Iterative Detection and Decoding on the Performance of BLAST" by X Li et al in the Proceedings of the IEEE Globecom 2000 Conference, San Francisco, November 27 to December 1 2000.

If vertical coding is used the Forward Error Correction (FEC) which is applied must have sufficient error-correcting ability to cope with the entire MIMO channel, which comprises a plurality of paths 110. For simplicity of illustration only direct paths 110 between antennas 108 are illustrated, but it will be appreciated that the set of paths will typically include indirect paths where signals are reflected by one or more scatterers.

A receiver (Rx) 112, also provided with a plurality of antennas 108, receives signals from the multiple paths which it then combines, decodes and demultiplexes to provide respective data streams to each application. Although both the transmitter 110 and receiver 112 are shown as having the same number of antennas, this is not necessary in practice and the numbers of antennas can be optimised depending on space and capacity constraints. Similarly, the transmitter 106 may support any number of applications (for example, a single application on a voice-only mobile telephone or a large number of applications on a PDA).

The central principle behind any 'parallel' type communication system is to find multiple ways with which to communicate, that can in some way be distinguished at the receiver. For example in OFDM systems, in effect, different sub-streams are sent at different carrier frequencies, the spacing of which are such that they are orthogonal and can be distinguished at the receiver. Similarly in the BLAST system, in a well scattered environment, by having the transmit antennas spaced a minimum distance of $\lambda/2$ from each other, the signal received by a single antenna consists of a linear sum of each sub-stream, the phase and amplitude of each sub-stream being independent. However, the sub-streams cannot be distinguished from the single antenna without more information - the problem is like solving a simultaneous equation with $J$ unknowns (the sub-streams), for which at least $J$ unrelated or independent equations are needed to distinguish the $J$ unknowns unambiguously. In the BLAST system, this is achieved by having $n_R$ ($\geq J$) antennas, each spaced apart from the others by a minimum distance of $\lambda/2$. This minimum spacing ensures that the $n_R$ signals from each receiver antenna provide $n_R$ independent linear combinations of the $J$ unknown sub-streams - the $n_R$ combinations being the required simultaneous equations. The coefficients for the equations are the complex channel transfer coefficients between the $n_T$ transmitter antennas and the $n_R$ receiver antennas, described by a transfer matrix **H** (discussed below).

An alternative way to transmit or receive uncorrelated waveforms is to use angular separation, a technique that is exploited in many current diversity systems (i.e. angular diversity). Multipath signals that arrive from (or are sent into) different directions generally experience different scatterers and thus each experience a different attenuation and time delay (i.e. a different complex channel transfer coefficient). So analogous to the BLAST system, uncorrelated signals can be formed at the receiver by transmitting sub-streams into distinct angles or directions.

A system made in accordance with the present invention provides an alternative wireless transceiver architecture to known systems such as BLAST, the basis of the invention being the transmission of $K$ separate sub-streams into $K$ different directions and the reception of multipath signals from $J$ distinct directions. The chosen directions, in each case, will depend on the directions from which multipath signals with greatest power or Signal to Noise Ratio (SNR) were received, as determined from a measurement of angular power spectrum $A(\Omega)$. Experimental measurements and simulations, for example as reported in the paper "A statistical model for angle of arrival in indoor multipath propagation" by Q Spencer et al in the published papers of the 1997 IEEE Vehicular Technology Conference, Phoenix, USA, 4-7 May 1997, pages 1415-19, suggest that multipath signals arrive in groups or clusters about uniformly random azimuth angles. Thus, it is likely that the chosen directions will correspond to the angle of arrival of these clusters. However, this does not prevent the invention from making use of individual paths within a cluster, provided an array of high enough resolution is used. Although the present invention describes a transceiver architecture, either the transmitter part or the receiver part may be used independently with another receiver or transmitter design such as BLAST. This is because at the transmitter or receiver the departing or incoming signals can be treated as either plane waves travelling in different directions (angular domain) or as an interference pattern in space (spatial domain as in BLAST).

A major advantage of an architecture according to the present invention is that by measuring the angular power spectrum of incoming multipath signals it is possible to determine the directions at which significant scatterers lie. Thus by beamforming at the receiver 112 into the directions in which multipath signals arrive, receiver power is used more efficiently. Subsequently, by transmitting into those directions, full use is made of the possible scatterers in the environment, thereby achieving an increased spectral efficiency since more of the transmitted power is received by the receiver 112. This is increasingly important for wireless systems operating at higher frequencies, where greater attenuation on average reduces the number of useful multipath components at the receiver.

Another advantage is that, as a transmitter, no knowledge of the transfer matrix **H** is needed, unlike the system disclosed in EP-A2-0,905,920, only of the angular power spectrum $A(\Omega)$.

Figure 2 is a flow chart illustrating the operation of a transceiver for a time-division multiplex system made in accordance with the present invention. The transceiver operation is depicted as a cycle for a transmitter 106 and receiver 112 forming part of a single transceiver, with steps on the right of the figure relating to the receiver 112 and those on the left to the transmitter 106.

The first action of the receiver 112 is to measure, at step 202, $A(\Omega)$, the angular spectrum of incoming multipath signals. Next, at step 204, the angular spectrum is processed to find $\Omega_j$, which are the directions the first $J$ peaks of greatest power in $A(\Omega)$. Beamforming techniques are then used, at step 206, in the chosen directions $\Omega_j$ to obtain $J$ respective received signals $r_j$. At step 208 elements of the transfer matrix $\mathbf{H}$ are determined, where $h_{jk}$ is the complex transfer coefficient of the channel between the $k^{th}$ transmit direction and the $j^{th}$ receive direction. Finally, for the receiver 112, at step 210 standard multiuser detection techniques are used to extract the $K$ transmitted sub-streams, where $s_k$ is the $k^{th}$ sub-stream.

In the transmitter 106 the first action, at step 212, is to demultiplex the incoming data into $J$ lower rate data streams, after which, at step 214, each of the $J$ sub-streams generated is transmitted in its respective direction $\Omega_j$. The transceiver then returns to receiver mode at step 202, adapting to any changes in multipath that may have occurred.

The precise implementation of each step in Figure 2 is not of particular importance in relation to the present invention, since there are a range of suitable known techniques Examples of these are described below. In practice, each cycle of the flow chart occurs for a complete burst of data. Hence, it is assumed that the measured angular spectrum $A(\Omega)$ and transfer matrix $\mathbf{H}$ are valid for the whole burst, and that at least $A(\Omega)$ is valid for the next burst to be transmitted.

An embodiment of the present invention as separate transmitter and receiver parts will now be described, considering first the transmitter part since it is generally more straightforward than the receiver. The description covers one reception and transmission cycle, i.e. the reception (including the processing/decoding) and then transmission of one frame or burst of bits.

The frame of bits is assumed to include 'payload' data along with any extra overhead for protocols and training sequences. For the adaptation process to be effective, the duration of the frame should be short enough for changes in the channel, caused by movement of transmitter, receiver or scatterers, to be negligible over the duration of the frame. Another important assumption is that the channel is narrowband, i.e. the delay spread of the channel is a lot smaller than the bit or symbol duration, so that the Channel Impulse Response (CIR) is essentially an impulse or delta function. This is the reason for denoting $h_{jk}$ the channel coefficient rather than the CIR. However, the present invention could be applied to wideband channels, for example if equalisation is used on each sample received from the specified directions $\Omega_j$.

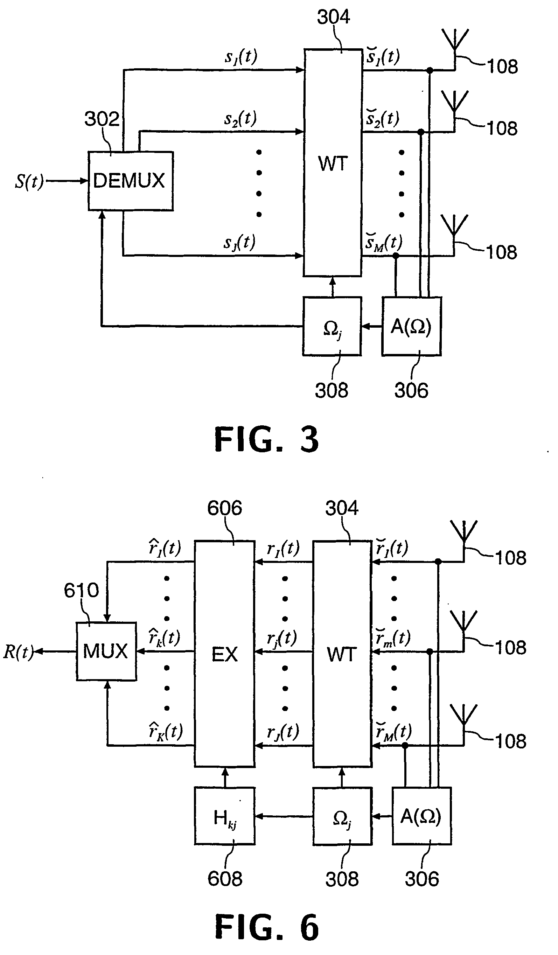

Figure 3 is a block schematic diagram of a transmitter 106. Incoming data $S(t)$ is separated by a demultiplexer 302 into $J$ sub-streams $s_j(t)$ $(1 \leq j \leq J)$, where $J \leq M$ and $M$ is the number of antennas 108. The number of sub-streams may be varied depending on radio channel characteristics or other requirements. Optionally, the bitrate $B_j$ or transmitted SNR $\gamma_{transj}$ may be varied for each sub-stream so as to maximise the overall transmitted bitrate for a given outage probability. This technique is known as "water filling", and is described for example in Information Theory and Reliable Communication by Robert Gallager, Wiley, pages 343 to 354.

The $J$ sub-streams are fed into a multiple-beam weighting matrix 304. This applies a set of complex weights $w_{mj}$ to the $J$ input sub-streams $s_j$ to generate $M$ output sub-streams $\breve{s}_m$, according to the following equation

$$\begin{bmatrix} \breve{s}_1 \\ \breve{s}_2 \\ \vdots \\ \vdots \\ \breve{s}_M \end{bmatrix} = \begin{bmatrix} w_{11} & w_{12} & \cdots & w_{1J} \\ w_{21} & & & w_{2J} \\ \vdots & & & \vdots \\ w_{M1} & \cdots & \cdots & w_{MJ} \end{bmatrix} \cdot \begin{bmatrix} s_1 \\ s_2 \\ \vdots \\ s_J \end{bmatrix} \qquad (1)$$

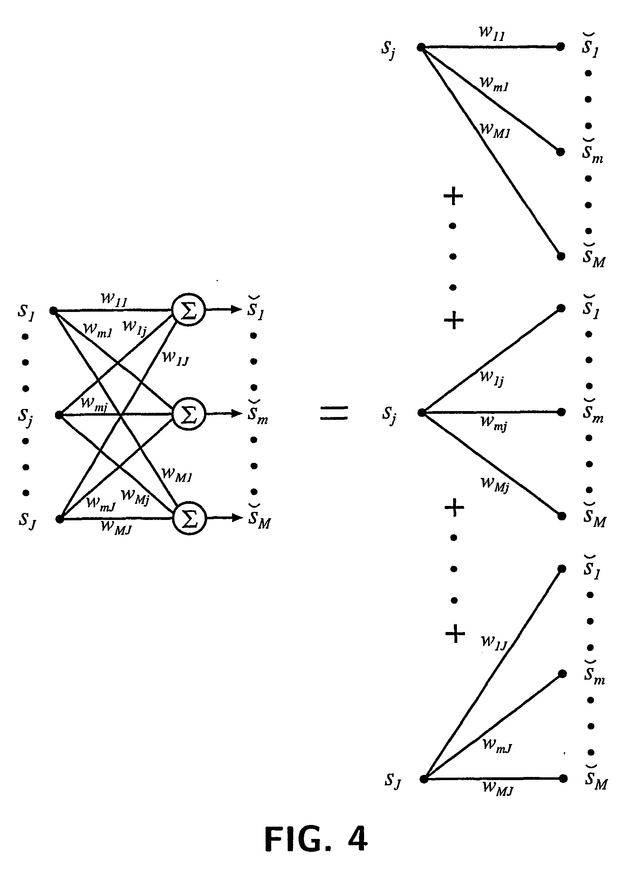

which can also be written as $\breve{s} = \mathbf{W}s$. The result of applying the complex weight matrix $\mathbf{W}$ to the vector of signals s is the vector of signals $\breve{s}$, the $m^{th}$ element of which is the signal applied to the $m^{th}$ antenna 108 of the array. Essentially, the weighting matrix 304 is beamforming for each of the $J$ sub-streams. Each sub-stream has its own set of weights across the antenna array, so that even though the effects for weights for all the sub-streams add up at the antenna array, the principle of superposition means the resultant far-field radiation pattern will be sum of radiation patterns designed for each sub-stream. All the fields will cancel or add up in the designed manner to give the $J$ sub-streams propagating in their respective directions. The generation of the antenna signals is shown graphically in Figure 4.

The angular spectrum of incoming multipath signals, $A(\Omega)$, is measured during receiver operation by a measuring block 306, as described below. A direction finding block 308 processes this spectrum to determine the $J$ directions with the best SNR and determines the required weights $w_{mj}$.

As indicated above, the direction in which the $j^{th}$ sub-stream is transmitted is controlled by the set of weights $w_{mj}$, where $1 \leq m \leq M$ (i.e. the $j^{th}$ column of the weight matrix **W**, denoted as $w_j$). This is shown mathematically by viewing equation 1 in the following way:

$$\breve{\mathbf{s}} = \begin{bmatrix} \breve{s}_1 \\ \breve{s}_2 \\ \vdots \\ \vdots \\ \breve{s}_M \end{bmatrix} = \sum_{j=1}^{J} s_j \begin{bmatrix} w_{1j} \\ w_{2j} \\ \vdots \\ \vdots \\ w_{Mj} \end{bmatrix} = \sum_{j=1}^{J} s_j \mathbf{w}_j \qquad (2)$$

The $M \times 1$ vector $\breve{\mathbf{s}}$ is a sum of $J$ vector terms, the $j^{th}$ term in the summation being the $j^{th}$ column vector of the weight matrix ($w_j$) multiplied by the $j^{th}$ sub-stream $s_j$. Hence, all that is left to do is to choose the complex weights for each of the $J$ sub-streams, which will become the columns of the weight matrix **W**.

In choosing the weights for the $j^{th}$ sub-stream, it is desirable to minimise the power sent into other directions corresponding to $q \neq j$, in order to minimise the Signal to Interference plus Noise Ratio (SINR) for the $j^{th}$ sub-stream at the receiver. One possible approach is to determine a set of weights to generate a beam peak in the direction $\Omega_j$ and a null in each of the other directions $\Omega_q$ ($q \neq j$, $1 \leq \{j,q\} \leq J$). This is a standard array processing problem, but has to be applied $J$ times in total, accounting for each sub-stream. An alternative approach is to treat all directions other than the desired direction as noise, and to minimise the noise output of the array subject to the condition that there is a beam peak in the direction $\Omega_j$. Various known methods are able to achieve either of the above objectives, for example as described in the paper "Application of Antenna Arrays to Mobile Communications, Part II: Beam-forming and Direction-of-Arrival Considerations", Proceedings of the IEEE, volume 85 number 8 (August 1997), pages 1195 to 1245.

For simplicity, the first approach will be used to illustrate an embodiment of the present invention. The basic principle relies on solving the following equation for each sub-stream:

$$\mathbf{w}_j^T \mathbf{A} = \mathbf{e}_j \qquad (3)$$

where A is an $M \times J$ matrix whose columns are the *steering vectors* $a(\Omega_j)$ for the directions $\Omega_j$ into which the $J$ sub-streams are to be transmitted (i.e. A = $[\mathbf{a}(\Omega_1), \mathbf{a}(\Omega_2), ..., \mathbf{a}(\Omega_J)]$) and $e_j$ is a row vector ($1 \times J$) whose elements are all zero except for the $j^{th}$, which is equal to one (i.e. the $p^{th}$ element of $e_j$ is $(e_j)_p = \delta_{pj}$, so for example $e_2=[01000]$ for $J=5$). The elements of the steering vector are just the responses needed in the array elements to produce a beam pattern with its peak in the direction $\Omega_j$. Therefore, the $j^{th}$ steering vector (or the $j^{th}$ column of A) is given by

$$\mathbf{a}(\Omega_j) = \begin{bmatrix} \exp\{j\omega_0\tau_1(\Omega_j)\} \\ \vdots \\ \exp\{j\omega_0\tau_m(\Omega_j)\} \\ \vdots \\ \exp\{j\omega_0\tau_M(\Omega_j)\} \end{bmatrix} \qquad (4)$$

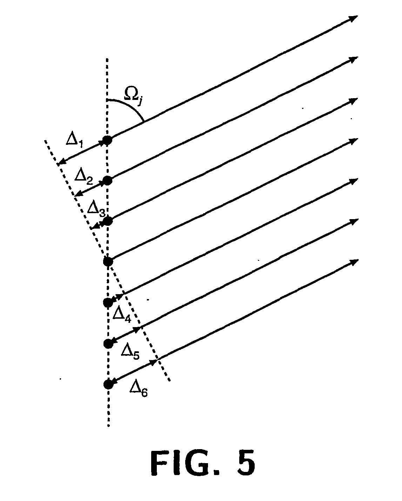

where $\tau_j(\Omega_j)$ is the time delay of the signal applied between the $m^{th}$ element ($1 \leq m \leq M$) of the array and an arbitrary origin. This is illustrated in Figure 5, where the distances $\Delta_j$ are related to the time delays by $\Delta_j(\Omega_j) = \tau_j(\Omega_j)c$ and $c$ is the speed of light.

Inverting equation 3 the correct weights to produce a peak in direction $\Omega_j$ and nulls in the other $J$-1 directions is

$$\mathbf{w}_j^T = \mathbf{e}_j \mathbf{A}^{-1} \qquad (5)$$

This assumes that $J=M$, so that A is square. If $J\neq M$, then the Generalised Inverse or Moore-Penrose Pseudoinverse $A^+$ for non-square matrices can be used to solve equation 3.

Stated simply, the set of weights needed for the $j^{th}$ sub-stream is just the $j^{th}$ row of the inverse matrix of **A.** Hence, once the directions $\Omega_j$ have been determined, the steering matrix **A** can be constructed and the inverse **$A^{-1}$** (or **$A^+$**) calculated. This is all the information required: the correct weights for each sub-stream are just the appropriate rows of the inverse matrix.

One further step is the transmission of training sequences in the frame of bits, which are needed by the receiver in order to extract the sub-streams. There are two types of training sequences needed by the receiver; one to enable a measurement of the angular spectrum $A(\Omega)$ and one for determination of the transfer matrix **H**. These points will be further discussed below.

Now consider the receiver part of a transceiver, with reference to Figure 6. In discussing an embodiment of a receiver 112, it is assumed that the transmitter at the other end of the link has transmitted $K$ sub-streams using either the described technique of sending sub-streams into different directions or a BLAST-like technique of sending sub-streams to separate antennas. The steps to be described would in practice occur before the steps described above for the transmitter.

The first step required in the receiver 112 is to make a measurement of the angular power spectrum $A(\Omega)$ in a measuring block 306. This measurement determines how the total power arriving is distributed across the different angles of arrival $\Omega$. To be able to make this measurement correctly, it is necessary for the transmitter 106 at the other end of the link 110 to send a suitable training signal for a period of the data frame. A suitable training signal would be one that illuminated all possible scatterers in the environment (i.e. a signal sent omnidirectionally or isotropically from the transmitter 106). This could, for example, be achieved by transmitting from a single antenna element 106 for a duration of one frame (assuming that the element is omnidirectional). As will be discussed below the training signal should also allow the measurement of the transfer matrix **H**.

There are a variety of known ways in which the angular spectrum could be measured. The most conventional method is a simple Fourier transform of the signal that is received across the array of antennas. Other techniques involve using super-resolution algorithms on the received array signal. Such algorithms are described for example in the paper "ESPRIT - Estimation of Signal Parameters via Rotational Invariance Techniques" by R Roy and T Kailath, IEEE Transactions on Acoustics, Speech and Signal Processing, volume ASSP-37 (1989), pages 984 to 995. They allow a much higher angular resolution of the incoming multipath signals, although they are computationally more intensive than a Fourier transform. The exact nature of the algorithms will depend on the arrangement and geometry of the array used.

Once the angular power spectrum has been determined, the next step is to choose in a direction finding block 308 the $J$ different directions from which the sub-streams will be received (and ultimately the directions into which the subsequent sub-streams for transmission will be transmitted by the transmitter 106). It is necessary for there to be at least as many directions $J$ as the number of transmitted sub-streams $K$, so that the receiver can unambiguously extract all the sub-streams. One method is to simply search the angular spectrum for the $J$ peaks of greatest SNR . This should result in a set of $J$ directions $\{\Omega_1,\Omega_2,...,\Omega_J\}$ from which multipath signals will be received.

The number of antenna elements 108 of the array, $M$ sets the maximum value of $J$. This is because, as is well-known, an array of $M$ antenna elements can only have a maximum of $M$-1 degrees of freedom in specifying the nulls of its antenna pattern. Hence, for each sub-stream there are at most $M$-1 independent directions in which nulls can be specified (and therefore from which other independent sub-streams can be received), so the maximum number of sub-streams is $M$. It is therefore important for transceivers at both ends of the wireless link 110 to have knowledge of the number of antennas 108 in the other transceiver's array.

The received signals across the array of antenna elements 108 can be viewed as a vector

$$\mathbf{\breve{r}} = [\breve{r}_1 \cdots \breve{r}_m \cdots \breve{r}_M]^T ,$$

where the $m^{th}$ element is the signal received by the $m^{th}$ antenna. A multiple-beam weighting matrix 304 applies a set of weights to the vector $\mathbf{\breve{r}}$ to give another vector of signals $r=[r_1 \cdots r_j \cdots r_J]^T$, which are the signals received from the directions $\Omega_j$ that were determined earlier. In other words,

$$\mathbf{r} = \mathbf{\breve{W}\breve{r}} \qquad\qquad\qquad (6)$$

It is therefore necessary to choose the rows of the weight matrix $\breve{\mathbf{W}}$, such that $r_j$ is the signal received from the direction $\Omega_j$. This problem has in fact already been solved in determining how to choose the weights that will transmit the $j^{th}$ sub-stream into the direction $\Omega_j$, for the transmitter part. Due to the reciprocity of receive and transmit arrays, the weights for receiving and transmitting in a given direction will be the same. Therefore,

$$\breve{\mathbf{W}} = \mathbf{W}^T \qquad\qquad (7)$$

where $^T$ denotes the transpose of the matrix and is needed so that mathematically the signal vectors and weight matrix $\breve{\mathbf{W}}$ correctly multiply. However, in the actual receiver no change in the weights are needed between the transmitter mode and receiver mode, since the reversal in the directions of the signals in the two cases takes care of the transpose:

The next step in the receiver 112 is to process, in an extraction block 606, the set of $J$ signals, received from the $J$ chosen receive directions, to generate $K$ signals (denoted by $\hat{r}_k, 1 \leq k \leq K$), which are estimates of the $K$ sub-streams that were sent from the other end of the wireless link. The $J$ signals are used to generate $J$ simultaneous equations in terms of $K$ unknowns, namely the sub-streams $s_k$:

$$
\begin{aligned}
r_1 &= h_{11}s_1 + h_{12}s_2 + \ldots + h_{1k}s_k + \ldots + h_{1K}s_K + n_1 \\
&\qquad\qquad\qquad\vdots \\
r_j &= h_{j1}s_1 + h_{j2}s_2 + \ldots + h_{jk}s_k + \ldots + h_{jK}s_K + n_j \qquad\qquad (8) \\
&\qquad\qquad\qquad\vdots \\
r_J &= h_{J1}s_1 + h_{J2}s_2 + \ldots + h_{Jk}s_k + \ldots + h_{JK}s_K + n_J
\end{aligned}
$$

The coefficients $h_{jk}$ that multiply the $K$ sub-streams in each of the $J$ signals (or equations) are the elements of the transfer matrix $\mathbf{H}$, which represent the complex transfer coefficients between the $K$ transmit directions and $J$ receive directions. (Alternatively, if the receiver 112 is receiving from a BLAST-type transmitter, then the coefficient $h_{jk}$ represents the coefficient between the $k^{th}$ transmitter antenna and the $j^{th}$ receive direction.) Hence, once the transfer matrix has been determined, by a channel characterising block 608, via some training scheme, the problem is essentially that of solving the set of simultaneous equations presented in equation 8 (assuming $J \geq K$). The terms $n_j$ represent the additive white Gaussian noise due to thermal noise in the environment and transceivers and are identically distributed, but independent.

There are again a variety of ways the sub-streams can be extracted using established techniques. These techniques are generally based on multiuser detection systems used in CDMA, where the aim is to identify different users. Here instead the aim is to identify different sub-streams carrying different signals. In the BLAST system, when an attempt is being made to decode a single sub-stream, $r_k$, all other contributions from interfering sub-streams are 'nulled' and any sub-streams already detected are subtracted from the received vector of signals $\hat{r}$. The process of nulling the interfering sub-streams is very similar to that described above for beamforming of the sub-streams by the transmitter 106, and is also detailed in the paper on BLAST cited above.

In essence these techniques are equivalent to conventional methods of solving linear simultaneous equations, with the difference that in the present case the equations involve quantities that are not perfectly known because of the presence of noise in the system. It is for this reason that $\hat{r}_k$ is a decision statistic for the $k^{th}$ sub-stream, as in conventional communication systems, rather than the sub-stream itself. Hence, each sub-stream $\hat{r}_k$ is subjected to a conventional bit-decision demodulation process, i.e. is it a one or a zero? Thus, using these techniques the $K$ sub-streams are recovered and multiplexed back by a multiplexing block 610 to regenerate the original high data rate bitstream $R(t)$.

The present invention can in principle be applied to any wireless communication scenario to give data rates with high spectral efficiency (i.e. high data rates in a relatively small bandwidth). The main requirement for the invention to work effectively is enough independent multipath signals separated with angle. As long as the number of independent multipath components $J$ is greater than or equal to the number of antennas $M$ in the transmitter array, the 'Shannon' capacity of the present transceiver architecture used in a MIMO system will increase linearly with $M$. Most of the analysis above assumes that the transmitter 106 and receiver 112 are quasi-static, i.e. transmitter and receiver stationary with moving users or objects causing very slow changes in the channel (i.e. the elements of the transfer matrix $\mathbf{H}$). However,

the system can cope with a moving transmitter and receiver, as long as the frame duration is significantly less. than the average period over which changes in the transfer matrix occur, making the system suitable for mobile cellular communications, as well as fixed point to point indoor wireless links.

As well as its use as a transceiver, the present invention is suitable for use as a transmitter only and as a receiver only combined with some other receiver or transmitter architecture respectively, for example BLAST, given the proper modifications discussed above. In particular, if a terminal only used the techniques of the present invention as a transmitter, it would still require a receiver capable of determining a variation in received signal characteristics with direction, to enable the transmit directions to be determined.

The embodiments described above above used the angular power spectrum $A(\Omega)$ of received signals to determine the directions from which the strongest signals were received and hence the optimum transmit and receive directions. However, other signal characterisations, for example SNR, could be used instead as long as they provided a suitable basis for selecting preferred directions. Whatever the signal characterisation employed, it will not always be necessary or desirable to characterise signals arriving from a full range of directions. For example, a land-based terminal may choose to ignore signals arriving from a near-vertical direction.

A range of modifications to the present invention is possible. The beamforming can be adaptive, so that the number of sub-streams $J$ and their directions $\Omega_j$ vary, or fixed, the latter involving less complexity. In a relatively simple system the power and bit rate of all sub-streams are the same, while in a more complex system the power and/or bit rate of each sub-stream could be varied depending on its received SNR. The geometry of the array of antennas 108 can span one, two or three dimensions to give a corresponding increase in the number of dimensions from which multipath signals can unambiguously be observed.

From reading the present disclosure, other modifications will be apparent to persons skilled in the art. Such modifications may involve other features which are already known in the design, manufacture and use of radio communication systems and component parts thereof, and which may be used instead of or in addition to features already described herein.

In the present specification and claims the word "a" or "an" preceding an element does not exclude the presence of a plurality of such elements. Further, the word "comprising" does not exclude the presence of other elements or steps than those listed.

## Claims

1. A terminal for use in a radio communication system having a communication channel comprising a plurality of paths between the terminal and another terminal transmitting separated sub-streams of a data stream via a plurality of antennas, wherein receiving means (112) are provided having direction determining means (306, 308) for determining a plurality of directions from which signals arrive from the other terminal, means for receiving (108, 304) a plurality of respective signals ($r_1(t)$, .. $r_J(t)$) from some or all of said plurality of directions, means for extracting (606) a plurality of sub-streams from the received signals and means for combining (610) the plurality of sub-streams to provide an output data stream (R(t)).

2. A terminal as claimed in claim 1, **characterised in that** the receiving means (112) further comprises means for determining (306) an angular power distribution of incoming signals.

3. A terminal as claimed in claim 2, **characterised in that** the direction determining means (306, 308) further comprises means for selecting (308) as the plurality of directions those directions from which the strongest signals arrive from the other terminal.

4. A terminal as claimed in claim 1 comprising means for separating (302) a signal (S(t)) for transmission to the other terminal into a plurality of sub-streams ($s_1(t)$, .., $s_J(t)$), and transmitting means (304, 306, 308, 108) for transmitting each sub-stream into a respective one of the plurality of directions determined by the receiving means.

5. A terminal as claimed in claim 4, **characterised in that** the numbers of transmitted and received sub-streams are not equal.

6. A terminal as claimed in claim 4, **characterised in that** the transmitting means (304, 306, 308, 108) includes control means (308) for operating a plurality of antennas (108) as an array and operable to adapt the antenna pattern for each sub-stream ($s_1(t)$, .., $s_J(t)$) such that a peak in the antenna pattern corresponds to the respective direction and nulls in the antenna pattern correspond to the directions in which other sub-streams are transmitted.

7. A terminal as claimed in any one of claims 4 to 6, **characterised in that** the transmitting means (304, 306, 308, 108) includes control means for independently adjusting the power and/or bitrate of each sub-stream ($s_1$(t), .., $s_J$(t)) depending on a signal quality parameter of the sub-stream.

8. A radio communication system having a communication channel comprising a plurality of paths between two terminals, **characterised in that** at least one of the two terminals is a terminal as claimed in claim 1.

9. A method of operating a radio communication system having a communication channel comprising a plurality of paths between a terminal and another terminal transmitting separated sub-streams of a data stream via a plurality of antennas, the method comprising the terminal determining (306, 308) a plurality of directions from which signals arrive from the other terminal, receiving (108, 304) a plurality of respective signals ($r_1$(t), .. $r_J$(t)) from some or all of said plurality of directions, extracting (606) a plurality of sub-streams from the received signals, and combining (610) the plurality of sub-streams to provide an output data stream.

10. A method of operating a radio communication system as claimed in claim 9, the method further comprising the terminal separating (302) a signal (S(t)) for transmission into a plurality of sub-streams ($s_1$(t), .., $s_J$(t)), and transmitting (304, 306, 308, 108) each sub-stream into a respective one of the plurality of determined directions.

11. A method as claimed in claim 10, **characterised by** independently adjusting the power and/or bitrate of each transmitted sub-stream ($s_1$(t), .., $s_J$(t)) depending on a signal quality parameter of the sub-stream.

**Patentansprüche**

1. Endgerät zur Verwendung in einem Funkkommunikationssystem mit einem Kommunikationskanal, der eine Vielzahl von Pfaden zwischen dem Endgerät und einem anderen Endgerät umfasst, das separate Teilströme eines Datenstroms über eine Vielzahl von Antennen überträgt, wobei Empfangsmittel (112) mit Richtungsbestimmungsmitteln (306, 308) vorgesehen sind, um eine Vielzahl von Richtungen zu bestimmen, aus denen Signale von dem anderen Endgerät eintreffen, Mittel zum Empfangen (108, 304) einer Vielzahl von jeweiligen Signalen ($r_1$(t),... $j_J$(t)) aus einigen oder allen der genannten Vielzahl von Richtungen, Mittel zum Extrahieren (606) einer Vielzahl von Teilströmen aus den empfangenen Signalen und Mittel zum Kombinieren (610) der Vielzahl von Teilströmen, um einen Ausgangsdatenstrom (R(t)) zu schaffen.

2. Endgerät nach Anspruch 1, **dadurch gekennzeichnet, dass** das Empfangsmittel (112) weiterhin Mittel zum Bestimmen (306) einer Winkelleistungsverteilung der eintreffenden Signale umfasst.

3. Endgerät nach Anspruch 2, **dadurch gekennzeichnet, dass** das Richtungsbestimmungsmittel (306, 308) weiterhin Mittel (308) umfasst, um als die Vielzahl von Richtungen diejenigen Richtungen auszuwählen, aus denen die stärksten Signale von dem anderen Endgerät eintreffen.

4. Endgerät nach Anspruch 1 mit Mitteln zum Aufteilen (302) eines Signals (S(t)) zur Übertragung an das andere Endgerät in eine Vielzahl von Teilströmen ($s_1$(t), ..., $s_J$(t)), und Sendemitteln (304, 306, 308, 108) zum Senden jedes Teilstroms in eine betreffende der Vielzahl von durch das Empfangsmittel bestimmten Richtungen.

5. Endgerät nach Anspruch 4, **dadurch gekennzeichnet, dass** die Anzahl der gesendeten und empfangenen Teilströme nicht gleich ist.

6. Endgerät nach Anspruch 4, **dadurch gekennzeichnet, dass** die Sendemittel (304, 306, 308, 108) Steuermittel (308) für den Betrieb einer Vielzahl von Antennen (108) als ein Array enthalten und dazu dienen, das Antennenmuster für jeden Teilstrom ($s_1$(t), ... , $s_J$(t)) so anzupassen, dass ein Peak in dem Antennenmuster mit der jeweiligen Richtung übereinstimmt und Nullen in dem Antennenmuster mit den Richtungen übereinstimmen, in denen andere Teilströme gesendet werden.

7. Endgerät nach einem der Ansprüche 4 bis 6, **dadurch gekennzeichnet, dass** die Sendemittel (304, 306, 308, 108) Steuermittel enthalten, um die Leistung und/oder Bitrate jedes Teilstroms ($s_1$(t), ..., $s_J$(t)) unabhängig entsprechend eines Signalgüteparameters des Teilstroms einzustellen.

8. Funkkommunikationssystem mit einem Kommunikationskanal mit einer Vielzahl von Pfaden zwischen zwei Endgeräten, **dadurch gekennzeichnet, dass** mindestens eines der beiden Endgeräte ein Endgerät nach Anspruch 1 ist.

9. Verfahren zum Betreiben eines Funkkommunikationssystems mit einem Kommunikationskanal, der eine Vielzahl von Pfaden zwischen einem Endgerät und einem anderen Endgerät umfasst, das separate Teilströme eines Datenstroms über eine Vielzahl von Antennen überträgt, wobei das Verfahren umfasst, dass das Endgerät (306, 308) eine Vielzahl von Richtungen bestimmt, aus denen Signale von dem anderen Endgerät eintreffen, eine Vielzahl von jeweiligen Signalen $(r_1(t),... j_J(t))$ aus einigen oder allen der genannten Vielzahl von Richtungen empfängt (108, 304), eine Vielzahl von Teilströmen aus den empfangenen Signalen extrahiert (606) und die Vielzahl von Teilströmen kombiniert (610), um einen Ausgangsdatenstrom (R(t)) zu schaffen.

10. Verfahren zum Betreiben eines Funkkommunikationssystems nach Anspruch 9, wobei das Verfahren weiterhin umfasst, dass das Endgerät ein Signal (S(t)) zur Übertragung in eine Vielzahl von Teilströmen $(s_1(t), ... s_J(t))$ aufteilt (302) und jeden Teilstrom in einer betreffenden der Vielzahl von bestimmten Richtungen sendet (304, 306, 308, 108).

11. Verfahren nach Anspruch 10, **gekennzeichnet durch** unabhängiges Einstellen der Leistung und/oder Bitrate von jedem gesendeten Teilstrom $(s_1(t), ..., s_J(t))$ entsprechend einem Signalgüteparameter des Teilstroms.

**Revendications**

1. Terminal pour être utilisé dans un système de communication par radio ayant un canal de communication qui comprend une pluralité de chemins entre le terminal et un autre terminal transmettant des sous-flots séparés d'un flot de données par le biais d'une pluralité d'antennes, dans lequel il est prévu des moyens de réception (112) ayant des moyens de détermination de direction (306, 308) pour déterminer une pluralité de directions dont des signaux arrivent de l'autre terminal, des moyens de réception (108, 304) pour recevoir une pluralité de signaux respectifs $(r_1(t), r_j(t))$ en provenance de quelques-unes ou de toutes de ladite pluralité de directions, des moyens d'extraction (606) pour extraire une pluralité de sous-flots à partir des signaux reçus et des moyens de combinaison (610) pour combiner la pluralité de sous-flots de manière à fournir un flot de données de sortie (R(t)).

2. Terminal selon la revendication 1, **caractérisé en ce que** les moyens de réception (112) comprennent encore des moyens de détermination (306) pour déterminer une distribution d'énergie angulaire de signaux entrants.

3. Terminal selon la revendication 2, **caractérisé en ce que** les moyens de détermination de direction (306, 308) comprennent encore des moyens de sélection (308) pour sélectionner en tant que pluralité de directions ces directions dont les signaux les plus intenses arrivent de l'autre terminal.

4. Terminal selon la revendication 1, comprenant des moyens de séparation (302) pour séparer un signal (S(t)) pour être transmis à l'autre terminal en une pluralité de sous-flots $(s_1(t), .. s_j(t))$ et des moyens de transmission (304, 306, 308, 108) pour transmettre chaque sous-flot dans une direction respective de la pluralité de directions qui sont déterminées par les moyens de réception.

5. Terminal selon la revendication 4, **caractérisé en ce que** les nombres de sous-flots transmis et reçus ne sont pas égaux.

6. Terminal selon la revendication 4, **caractérisé en ce que** les moyens de transmission (304, 306, 308, 108) comprennent des moyens de commande (308) pour faire fonctionner une pluralité d'antennes (108) en tant qu'un réseau et **en ce qu'**ils sont opérationnels pour adapter la configuration d'antenne pour chaque sous-flot $(s_1(t), .. s_j(t))$ de telle façon qu'une crête dans la configuration d'antenne corresponde à la direction respective et que des nuls dans la configuration d'antenne correspondent aux directions dans lesquelles d'autres sous-flots sont transmis.

7. Terminal selon l'une quelconque des revendications précédentes 4 à 6, **caractérisé en ce que** les moyens de transmission (304, 306, 308, 108) comprennent des moyens de commande pour ajuster indépendamment la puissance et/ou le débit binaire de chaque sous-flot $(s_1(t), .. s_j(t))$ en fonction d'un paramètre de qualité de signal du sous-flot.

8. Système de communication par radio ayant un canal de communication comprenant une pluralité de chemins entre deux terminaux, **caractérisé en ce qu'**au moins un des terminaux est un terminal selon la revendication 1.

**9.** Procédé de fonctionnement d'un système de communication par radio ayant un canal de communication comprenant une pluralité de chemins entre un terminal et un autre terminal transmettant des sous-flots séparés d'un flot de données par le biais d'une pluralité d'antennes, le procédé comprenant le terminal déterminant (306, 308) une pluralité de directions dont des signaux arrivent de l'autre terminal, recevant (108, 304) une pluralité de signaux respectifs ($r_1(t)$, ..$r_j(t)$) en provenance de quelques-unes ou de toutes de ladite pluralité de directions, extrayant (606) une pluralité de sous-flots à partir des signaux reçus et combinant (610) la pluralité de sous-flots de manière à fournir un flot de données de sortie.

**10.** Procédé de fonctionnement d'un système de communication par radio selon la revendication 9, le procédé comprenant encore le terminal séparant (302) un signal (S(t)) pour être transmis dans une pluralité de sous-flots ($s_1(t)$, .. $s_j(t)$) et transmettant (304, 306, 308, 108) chaque sous-flot dans une direction respective de la pluralité de directions déterminées.

**11.** Procédé selon la revendication 10, **caractérisé par** l'ajustement indépendant de la puissance et/ou du débit binaire de chaque sous-flot transmis ($s_1(t)$, .. $s_j(t)$) en fonction d'un paramètre de qualité de signal du sous-flot.

**FIG. 1**

**FIG. 2**

**FIG. 3**

**FIG. 6**

**FIG. 4**

15

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0171843 A
- US 6067290 A
- EP 0905920 A2

- WO 9836596 A
- WO 9842150 A
- WO 0156192 A


**Non-patent literature cited in the description**

- **P W WOLNIANSKY et al.** V-BLAST: an architecture for realising very high data rates over the rich-scattering wireless channel. *1998 URSI International Symposium on Signals, Systems and Electronics,* 29 September 1998
- **A G BURR.** Channel Capacity Evaluation of Multi-Element Antenna Systems using a Spatial Channel Model. *ESA Millennium Conference on Antennas and Propagation, Davos, Switzerland,* 09 April 2000
- **X LI et al.** Effects of Iterative Detection and Decoding on the Performance of BLAST. *Proceedings of the IEEE Globecom 2000 Conference,* 27 November 2000

- **Q SPENCER et al.** A statistical model for angle of arrival in indoor multipath propagation. *1997 IEEE Vehicular Technology Conference,* 1415-19
- **ROBERT GALLAGER.** Information Theory and Reliable Communication. Wiley, 343-354
- Application of Antenna Arrays to Mobile Communications, Part II: Beam-forming and Direction-of-Arrival Considerations. *Proceedings of the IEEE,* August 1997, vol. 85 (8), 1195-1245
- **R ROY ; T KAILATH.** ESPRIT - Estimation of Signal Parameters via Rotational Invariance Techniques. *IEEE Transactions on Acoustics, Speech and Signal Processing,* 1989, vol. ASSP-37, 984-995